# EUROPEAN PATENT APPLICATION

(11) **EP 2 194 536 A1**
(43) Date of publication of application: **09.06.2010**
(21) Application number: 08838379.9
(22) Date of filing: 10.10.2008
(51) Int. Cl.: G21D 3/00, F01D 15/10, F02C 1/05, F02C 7/26, F02C 7/275, G21D 5/06, H02P 9/04

(54) **CLOSED CYCLE PLANT**

(30) Priority: 12.10.2007 JP 2007266620
(71) Applicant: Mitsubishi Heavy Industries, Ltd., Tokyo 108-8215 (JP)
(72) Inventor: KAMOHARA, Satoru, Tokyo 108-8215 (JP); SONODA, Takashi, Takasago-shi Hyogo 676-8686 (JP); HAMAURA, Nagayuki, Takasago-shi Hyogo 676-8686 (JP)
(74) Representative: HOFFMANN EITLE
(86) International application number: PCT/JP2008/068436
(87) International publication number: WO 2009/048129

(57) **Abstract**

The objects are to provide easy maintenance/inspection and to rapidly achieve stable start-up of a plant. Provided is a closed-cycle plant including a high-temperature gas-cooled reactor having a nuclear reactor; a gas turbine that is driven by working fluid heated in the high-temperature gas-cooled reactor; a low-pressure compressor and high-pressure compressor that are linked coaxially with the gas turbine; a power generator connected to the gas turbine through an output shaft; and a power supply unit that is connected to the power generator in a disconnectable manner and supplies electric power, wherein, at startup, the power supply unit is connected to the power generator and electric power is supplied so as to make the speed-up ratio of the power generator constant.

## Description

### Technical Field

The present invention relates to a closed-cycle plant that generates electricity by utilizing heat produced in a high-temperature gas-cooled reactor.

### Background Art

A closed-cycle plant that uses a nuclear reactor as a heat source and generates electricity by utilizing helium gas heated in the nuclear reactor to drive a gas turbine is known (see, for example, Patent Document 1).
Patent Document 1 proposes providing a starting blower system in a closed cycle comprising a nuclear reactor, turbines of several types, a compressor, and the like, and establishing a Brayton cycle, at startup time, by operating this starting blower system to circulate helium gas within the closed cycle to gradually increase the rotational speed of the gas turbine.
Patent Document 1: Japanese Translation of PCT International Application, Publication No. 2005-508492

### Disclosure of Invention

However, with the system described in the above-mentioned Patent Document 1, since the starting blower system is provided within the closed cycle in which radioactive working fluid is circulated, there is a problem that maintenance/inspection of the starting blower system is difficult. Furthermore, since helium gas is gradually circulated at startup time, there is also a problem that it takes some time to start up.

An object of the present invention is to provide a closed-cycle plant that is easily maintained/inspected and is capable of rapidly achieving stable start-up of the plant.

The present invention provides a closed-cycle plant including a high-temperature gas-cooled reactor having a nuclear reactor; a gas turbine that is driven by working fluid heated in the high-temperature gas-cooled reactor; a compressor that is linked coaxially with the gas turbine; a power generator connected to the gas turbine through an output shaft; and a power supply unit that is connected to the power generator in a disconnectable manner and supplies electric power to the power generator, wherein, at startup time, the power supply unit is connected to the power generator, and electric power is supplied so as to make the speed-up ratio of the power generator constant.

In this manner, at startup time, since electric power is supplied from the power supply unit to the power generator and the power generator is made to function as a motor, rotation control of the gas turbine can easily be performed. Also, since the power supply unit performing the rotation control of the gas turbine can be provided outside the system in which radioactive working fluid is flowing, maintenance/inspection can easily be conducted without considering the effect of radioactive material and the like.
Also, the output lower bound (for example, output power lower bound) with which stable operation is ensured is decided on the basis of the rotational speed of the power generator, and if the power supply unit is operated in the region under this output lower bound (hereinafter, this region is simply referred to as "unstable region"), the output becomes unstable and the performance will be lowered. When the output control of the power supply unit is performed on the basis of the torque of the power generator, there is a risk that the power supply unit may be used in the unstable region; however, by performing the output control so that the speed-up ratio of the power generator is kept constant, usage in the unstable region can be avoided.
Also, by using an electrical instrument as the power supply unit, the responsiveness can be improved and the startup time can be shortened.

In the above closed-cycle plant, the power supply unit may determine the speed-up ratio of the power generator based on the rotational speed of the power generator and supply electric power so as to keep the speed-up ratio constant.

In this manner, by controlling the output of the power supply unit on the basis of the rotational speed of the power generator, compared to controlling on the basis of the torque of the power generator, speed control of the power generator or control of the speed-up ratio can be performed easily and with high accuracy. Also, by monitoring the rotational speed of the power generator directly, usage of the power supply unit in the unstable region can be avoided, and a stable supply of electric power can be realized.

The above-mentioned closed-cycle plant may further include a rotational speed controller that restrains the rotational speed of the power generator by increasing the load, when the output of the power supply unit is equal to or less than the output threshold value that is set at or above the output lower bound where stable operation of the power supply unit is ensured.

According to the above-mentioned configuration, when the output of the power supply unit is equal to or less than the output threshold value which is set at or above the output lower bound, the load is forcedly increased; therefore, in the power supply unit, control is performed so as to increase the output in order to increase the rotational speed of the power generator. Thus, the output of the power supply unit can be increased, and it is possible to avoid the output becoming equal to or less than the output lower bound. As a result, the power supply unit can be used in the stable output region.

In the above closed-cycle plant, the rotation controller may include a continuous resistor device that is connected to the power generator in a disconnectable manner.

According to such a configuration, the load increment can be adjusted electrically. Thus, the responsiveness of the load can be increased.

In the above closed-cycle plant, the rotation controller may include a flow control valve that adjusts the flow rate of coolant supplied to the compressor, wherein the rotational speed of the power generator may be restrained by controlling the degree of opening of the flow control valve.

The above-mentioned closed-cycle plant may further include a control device that controls the load increment of the rotational speed controller on the basis of the difference between the output of the power supply unit and the output threshold value.

According to such a configuration, the load increment of the rotational speed controller can be suitably controlled on the basis of the relationship between the output of the power supply unit and the output threshold value. Thus, it is possible to avoid the output of the power supply unit falling into the unstable region.

In the above closed-cycle plant, when the rotational speed of the power generator has reached the predetermined target rotational speed, the output threshold value may be set so as to hold the output of the power supply unit.

Thus, when the rotational speed of the power generator has reached the predetermined target rotational speed, the balance between the output of the power supply unit and the load increment by the rotational speed controller can be maintained. As a result, fluctuation of the rotational speed of the power generator upon stopping the power supply unit and the rotational speed controller can be reduced to the minimum, and changes in the state of the plant upon connecting the power generator and the electric power system can be reduced to the minimum.

In the above closed-cycle plant, when the rotational speed of the power generator has reached the predetermined target rotational speed, the control device may match one of the output threshold value of the power supply unit and the load increment of the rotational speed controller with the other.

Thus, when the rotational speed of the power generator has reached the predetermined target rotational speed, the balance between the output torque of the power supply unit and the load increment by the rotational speed controller can be maintained. As a result, the rotational speed of the power generator upon stopping the power supply unit and the rotational speed controller can be reduced to the minimum and changes in the state of the plant can be reduced to the minimum.
Also, each quantity of state mentioned above can be utilized in various combinations within the permissible range.

According to the present invention, an advantage is afforded in that maintenance/inspection can be easily conducted, and stable start-up of the plant can be rapidly achieved.

### Brief Description of Drawings

[FIG. 1] FIG. 1 is a diagram showing, in outline, the overall configuration of a closed-cycle plant according to a first embodiment of the present invention.
[FIG. 2] FIG. 2 is a diagram showing an example output characteristic of a power supply unit.
[FIG. 3] FIG. 3 is a diagram showing an example load characteristic of a continuous resistor bank.
[FIG. 4] FIG. 4 is a control block diagram of a control device according to the first embodiment of the present invention.
[FIG. 5] FIG. 5 is a control block diagram showing a modification of the configuration of the control device shown in FIG. 4.
[FIG. 6] FIG. 6 is a control block diagram showing a modification of the configuration of the control device shown in FIG. 4.
[FIG. 7] FIG. 7 is a control block diagram of a control device according to a second embodiment of the present invention.
[FIG. 8] FIG. 8 is a diagram for explaining an output threshold value used in the control device shown in FIG. 7.
[FIG. 9] FIG. 9 is a control block diagram of a control device according to a third embodiment of the present invention.
[FIG. 10] FIG. 10 is a diagram for explaining the operation of the control device shown in FIG. 9.
[FIG. 11] FIG. 11 is a control block diagram showing a modification of the configuration of the control device shown in FIG. 9.

### Explanation of Reference Signs:

- 1:: closed-cycle plant
- 2:: closed cycle
- 11:: high-temperature gas-cooled reactor
- 12:: gas turbine
- 13:: heat exchanger
- 14:: low-pressure compressor
- 15:: high-pressure compressor
- 20 and 21:: flow control valve
- 22:: power generator
- 23:: power supply unit
- 24:: continuous resistor bank
- 25, 25a, 25b:: control device
- 31:: first subtracting unit
- 32:: first selecting unit
- 33:: second selecting unit
- 34:: second subtracting unit
- 35, 36, 37:: multiplier
- 38:: hold unit
- 39:: switch

### Best Mode for Carrying Out the Invention

An embodiment of a closed-cycle plant according to the present invention will be described below with reference to the drawings.

### [First Embodiment]

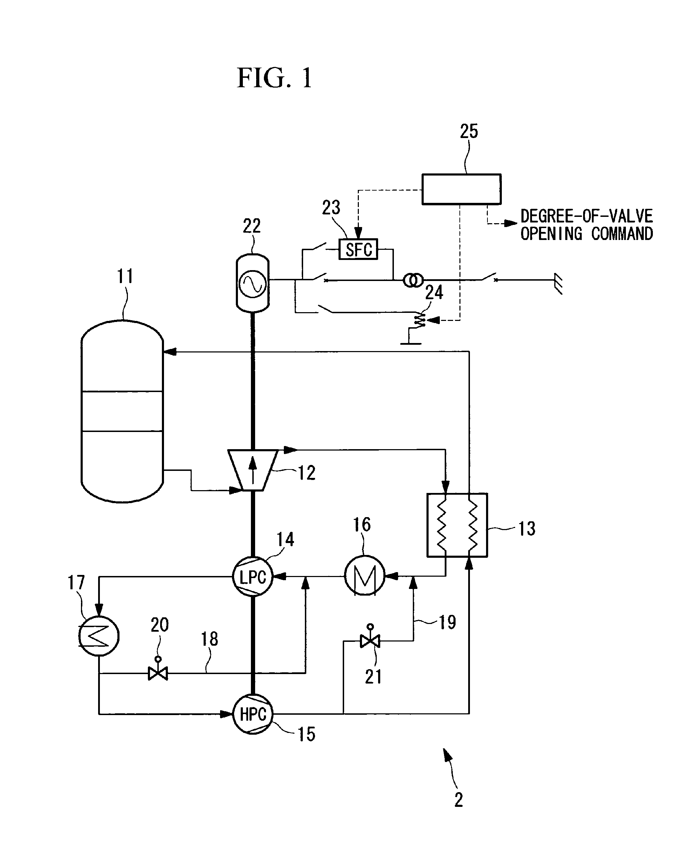

In FIG. 1, the overall configuration of a closed-cycle plant according to a first embodiment of the present invention is shown in outline.

As shown in FIG. 1, the closed-cycle plant 1 includes a closed cycle 2 in which helium gas (working fluid) used as a coolant in a high-temperature gas-cooled reactor 11 is sent, through a gas turbine 12, a heat exchanger 13, a low-pressure compressor 14, a high-pressure compressor 15, and the like, to the heat exchanger 13 again and is then returned to the high-temperature gas-cooled reactor 11.
In the above-mentioned closed cycle 2, a cooler 16 for cooling the helium gas is provided between the heat exchanger 13 and the low-pressure compressor 14 to improve the compression efficiency at the low-pressure compressor 14. Similarly, a cooler 17 for cooling the helium gas is provided between the low-pressure compressor 14 and the high-pressure compressor 15 to improve the compression efficiency at the high-pressure compressor 15.

Also, a bypass line 18 for bypassing the helium gas discharged from the cooler 17 and feeding the helium gas to the low-pressure compressor 14, and a bypass line 19 for bypassing the helium gas discharged from the high-pressure compressor 15 and feeding the helium gas to the cooler 16 are provided in the closed cycle 2. Flow control valves (rotational speed controllers) 20 and 21 for controlling the flow rate of the helium gas to be bypassed are provided in the bypass lines 18 and 19, respectively.
The gas turbine 12, the low-pressure compressor 14, the high-pressure compressor 15, and the power generator 22 are linked uniaxially.

The power supply unit 23 for supplying electric power to the power generator 22 at startup of the closed-cycle plant 1 is connected, in a disconnectable manner, to the power generator 22. The power supply unit 23 has, for example, a function that supplies electrical current to the power generator on the basis of a signal from the control device to operate the power generator as a motor. The above-mentioned power supply unit 23 may be for example, an SFC (Static Frequency Converter).

Also, a continuous resistor bank (CRB: Continuous Resistor Bank) 24 for increasing the load is connected, in a disconnectable manner, to the power generator 22. The continuous resistor bank (rotation controller) 24 is formed of a plurality of resistive elements, and the load increment is adjusted by controlling the number, or the like, of the resistive elements connected to the power generator 22. By connecting the continuous resistor bank 24 to the power generator 22, a brake is applied to the rotation of the power generator 22, and so, the rotational speed can be controlled.
The above-described flow control valves 20 and 21 also function as a rotational speed controller for applying a brake to the rotation of the power generator 22. In other words, by opening the flow control valves 20 and 21 to a predetermined degree of opening, the amount of helium gas fed to the low-pressure compressor 14 is increased and the motive power of the low-pressure compressor is increased, thereby making it possible to lower the rotation of the power generator 22 indirectly.

The above-mentioned continuous resistor bank 24 and flow control valves 20 and 21 are controlled by the control device 25. By adjusting the resistance value of the continuous resistor bank 24 according to the rotational speed of the power generator 22 and the output of the power supply unit 23 and adjusting the degrees of opening of the flow control valves 20 and 21 provided in the bypass lines 18 and 19, respectively, the control device 25 suitably increases the load to control the rotation of the power generator 22.

In the closed-cycle plant 1 having such a configuration, under normal operation, the high-temperature gas-cooled reactor 11 is fed with a fuel element which is coated particle fuel that is ceramic micro fuel particles, which is a fission product, multi-coated with pyrocarbon and silicon carbide, and the fission products in the fuel element undergo nuclear fission. The heat energy produced by the nuclear fission of this fission product is imparted to the helium gas, which is working fluid, and the high-temperature high-pressure helium gas is discharged from the high-temperature gas-cooled reactor 11. The high-temperature high-pressure helium gas is sent to the gas turbine 12 and drives the gas turbine 12. The rotational force of the gas turbine 12 is transmitted in the form of motive power to the power generator 22, which is linked uniaxially with the gas turbine 12, and the generation of electricity is conducted at the power generator 22.

The helium gas that has expended work in the gas turbine 12 is discharged to the heat exchanger 13. In the heat exchanger 13, heat exchange between the low temperature helium gas discharged from the gas turbine 12 and the high pressure helium gas discharged from the high-pressure compressor 15 described below is conducted. The helium gas cooled by the heat exchange is sent to the low-pressure compressor 14 through the cooler 16 and is compressed. The compressed helium gas is sent to the high-pressure compressor 15 through the cooler 17. The helium gas pressurized in the high-pressure compressor 15 is sent to the heat exchanger 13 again, where heat exchange with the helium gas discharged from the gas turbine 12 is conducted. Thus, the warmed helium gas is returned to the high-temperature gas-cooled reactor 11 again.

Next, the operation of the above-mentioned closed-cycle plant 1 at startup is described.
First of all, at startup, the power generator 22 is rotated by supplying electric power (electrical current) to the power generator 22 from the power supply unit 23, and the gas turbine 12 that is linked coaxially with the power generator 22 is rotated. In this manner, at startup of the closed-cycle plant 1, the power generator 22 functions as a motor that provides rotational force to the gas turbine 12.

The power supply unit 23 monitors, for example, the rotational speed of the power generator 22 and supplies electric power, on the basis of this rotational speed, so that the speed-up ratio of the power generator 22 becomes constant. When the rotational speed of the power generator 22 has reached the predetermined target rotational speed and a state capable of autonomous operation is achieved, the power supply unit 23 cuts the connection with the power generator 22. Thereafter, the power generator 22 and a utility grid (network) are connected, thereby causing the electric power generated in the power generator 22 to flow into the utility grid.

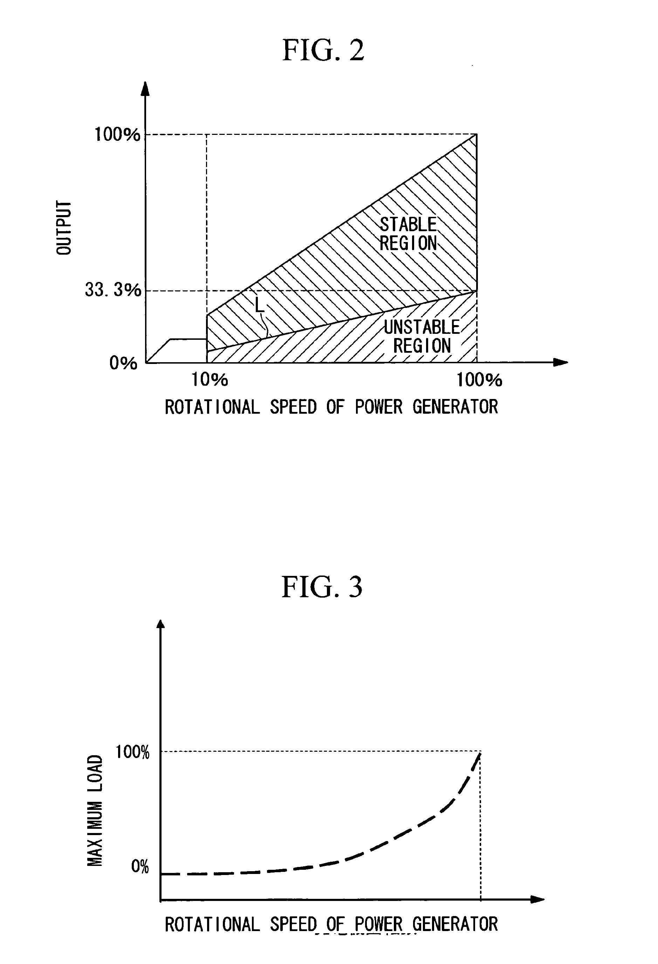

The above-mentioned power supply unit 23 has an output characteristic such as that shown in FIG. 2. In FIG. 2, the horizontal axis indicates the rotational speed of the power generator and the vertical axis indicates output power (hereinafter, output power is simply referred to as "output") of the power supply unit. In FIG. 2, the region under the output lower bound determined on the basis of the rotational speed, in other words, the output region shown as an unstable region in the figure, is a region where the output of the power supply unit 23 is not stable and an output region where the performance deteriorates. Therefore, it is required to control the output of the power supply unit 23 so that the power supply unit 23 is not operated in the unstable region shown in FIG. 2.

Thus, in this embodiment, when the output of the power supply unit 23 is lowered to the vicinity.of the unstable region due to the decrease of the torque of the power generator 22, the control device 25 forcedly increases the load by operating the continuous resistor bank 24 and flow control valves 20 and 21 to control the rotational speed of the power generator 22. By forcedly increasing the load, control so as to increase the output is performed at the power supply unit 23 in order to increase the rotational speed of the power generator 22; therefore, the output of the power supply unit 23 can be maintained above the unstable region.

In FIG. 3, a load characteristic of the continuous resistor bank 24 is shown. In FIG. 3, the horizontal axis indicates the rotational speed of the power generator and the vertical axis indicates the load value that can be increased by the continuous resistor bank 24 (the maximum load). As shown in this figure, the maximum load of the continuous resistor bank 24 is proportional to the square of the rotational speed of the power generator 22.

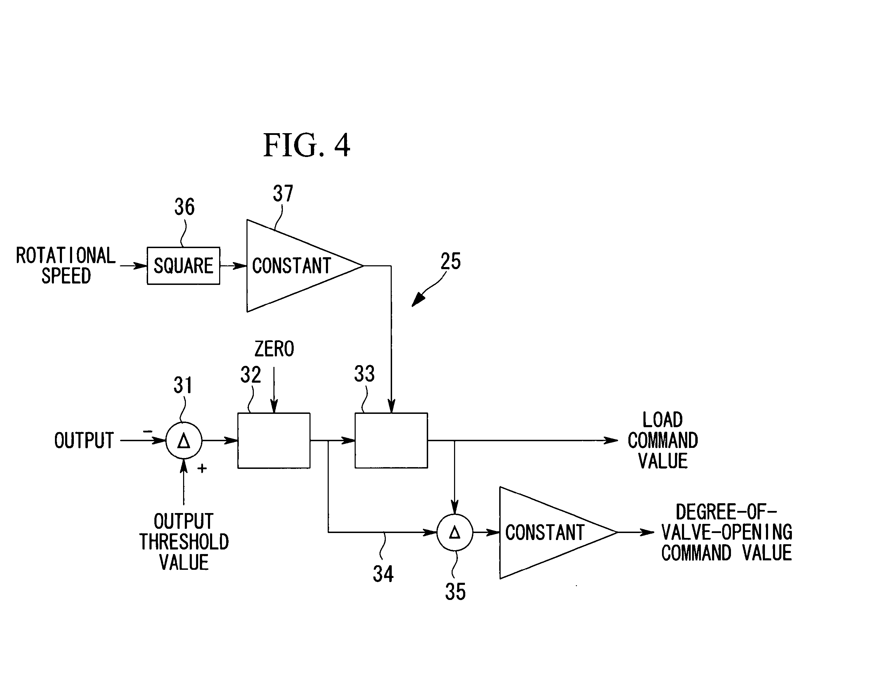

Next, specific control of the continuous resistor bank 24 and the flow control valves 20 and 21 by the above-mentioned control device 25 is described with reference to FIG. 4. FIG. 4 shows the control block diagram of the control device 25.
As shown in FIG. 4, the control device 25 includes a first subtracting unit 31 that calculates the difference between the output of the power supply unit 23 and the output threshold value of the power supply unit 23; a first selecting unit 32 that compares the output of the first subtracting unit 31 and zero and outputs the larger value; a second selecting unit 33 to which the output from the first selecting unit 32 and the load upper bound of the continuous resistor bank 24 described below are input, which selects the smaller value and outputs this smaller value as the load command value of the continuous resistor bank 24; a second subtracting unit 34 that calculates the difference between the output of the first selecting unit 32 and the output of the second selecting unit 33; and a multiplying unit 35 that outputs the value obtained by multiplying the output from the second subtracting unit 34 by a constant α as a degree-of-opening command value of the flow control valves 20 and 21.

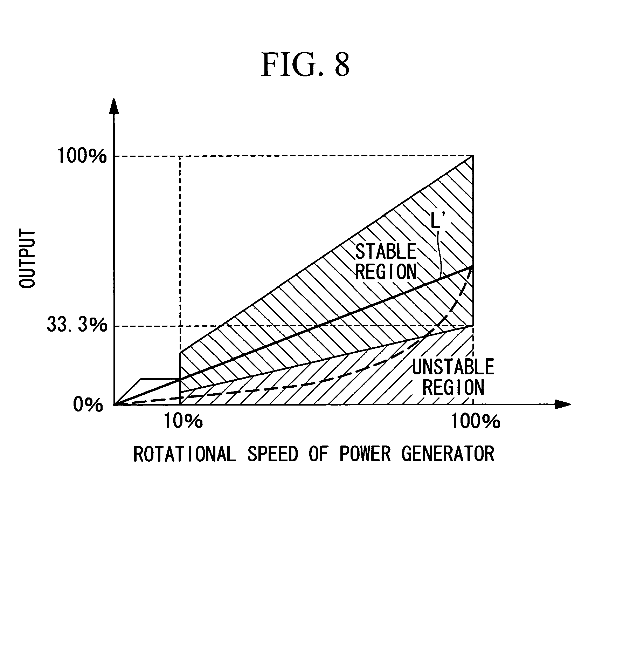

Here, the output threshold value of the power supply unit 23 supplied to the first subtracting unit 31 is set equal to or more than the output lower bound (straight line L in FIG. 2) where stable operation of the power supply unit 23 is ensured. The output threshold value is a value obtained by a predetermined functional expression taking the rotational speed of the power generator 22 as a variable, and as shown by the straight line L' in FIG. 8, for example, is defined as a function of the rotational speed of the power generator 22.
The closer the set value of the output threshold value is to the output lower bound, the more efficient operation control with less electric power loss becomes possible. In other words, by setting the output threshold value to the values on the straight line L shown in FIG. 2, it is possible to reduce the electric power loss to the minimum.

Also, a load limit input to the above-mentioned second selecting unit 33 is obtained by multiplying the squared value of the rotational speed of the power generator 22 (the maximum load shown in FIG. 3) by the predetermined constant α. Here, the predetermined constant α is a positive value.

According to such a control device 25, for example, when the output of the power supply unit 23 is equal to or more than the output threshold value, zero is output from the first selecting unit 32, and then, the load command value and the degree-of-valve-opening command value become zero. In other words, in this state, the continuous resistor bank 24 enters a state where the continuous resistor bank 24 is not connected to the power generator 23, and further, since the flow control valves 20 and 21 are in the fully closed state, there is no bypass of the helium gas; thus, the load is not increased by this rotational speed controller.

On the other hand, when the output of the power supply unit 23 is less than the output threshold value, the output from the first subtracting unit 31 becomes negative, and so, a value obtained by subtracting the output of the power supply unit 23 from the output threshold value will be selected and output by the first selecting unit 32. By doing so, the load corresponding to the amount by which the output of the power supply unit 23 is lowered from the output threshold value will be forcedly increased by the continuous resistor bank 24 and the bypassing of the helium gas.

In this case, the control device 25 preferentially uses the continuous resistor bank 24 to increase the load. In this manner, by preferentially using the continuous resistor bank 24, having superior responsiveness, it is possible to increase the load rapidly. On the other hand, when insufficient output of the power supply unit 23 cannot be compensated for by the increased load due to the continuous resistor bank 24, the control device 25 also operates the flow control valves 20 and 21 to bypass the helium gas, thereby allowing the load to be increased.

As described above, according to the closed-cycle plant 1 of this embodiment, at startup of the plant, because electric power is supplied from the power supply unit 23 to the power generator 22 and the power generator 22 is made to function as a motor, the rotation control of the gas turbine 12 can easily be performed. Also, since the power supply unit 23, the control device 25, and the like, performing rotation control of the gas turbine 12, can be provided separately from the closed cycle 2, the power supply unit 23 and the like can easily be maintained/inspected without considering the effects of radioactive material and the like.

In the above-described embodiment, although the load is increased by the continuous resistor bank 24 and the flow control valves 20 and 21, instead, the load may be increased only by the continuous resistor bank 24, or only by the flow control valves 20 and 21.

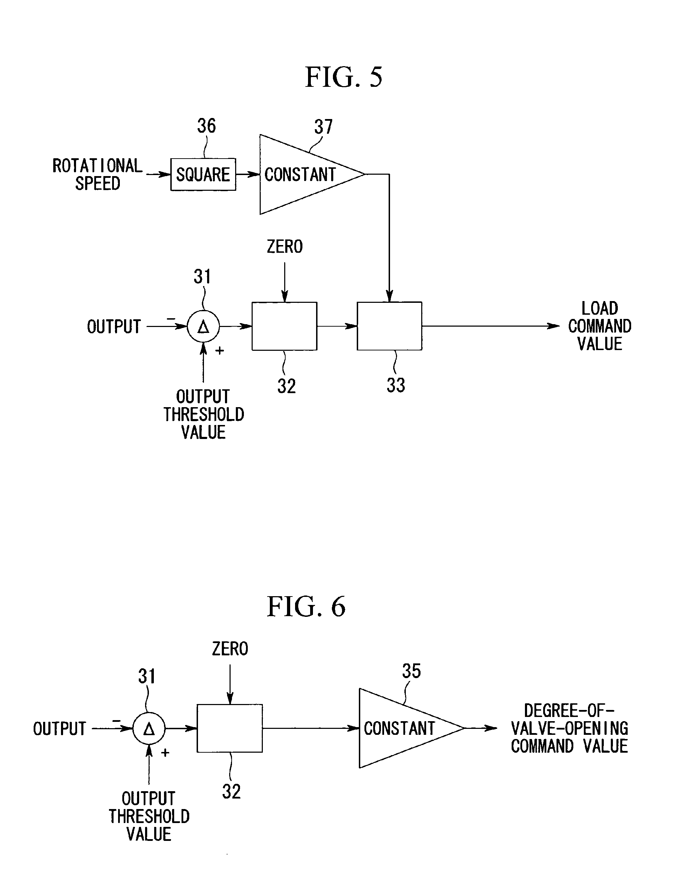

In FIG. 5, a control block diagram of the control device for the case where the load is increased only by using the continuous resistor bank 24 is shown, and in FIG. 6, a control block diagram of the control device for the case where the load is increased only by operating the flow control valves 20 and 21 is shown.

### [Second Embodiment]

Next, a closed-cycle plant according to a second embodiment of the present invention will be described.
The closed-cycle plant according to this embodiment is different from the above described first embodiment in the configuration of the control device. Regarding the closed-cycle plant according to this embodiment, differences from the above-mentioned first embodiment will mainly be described below.

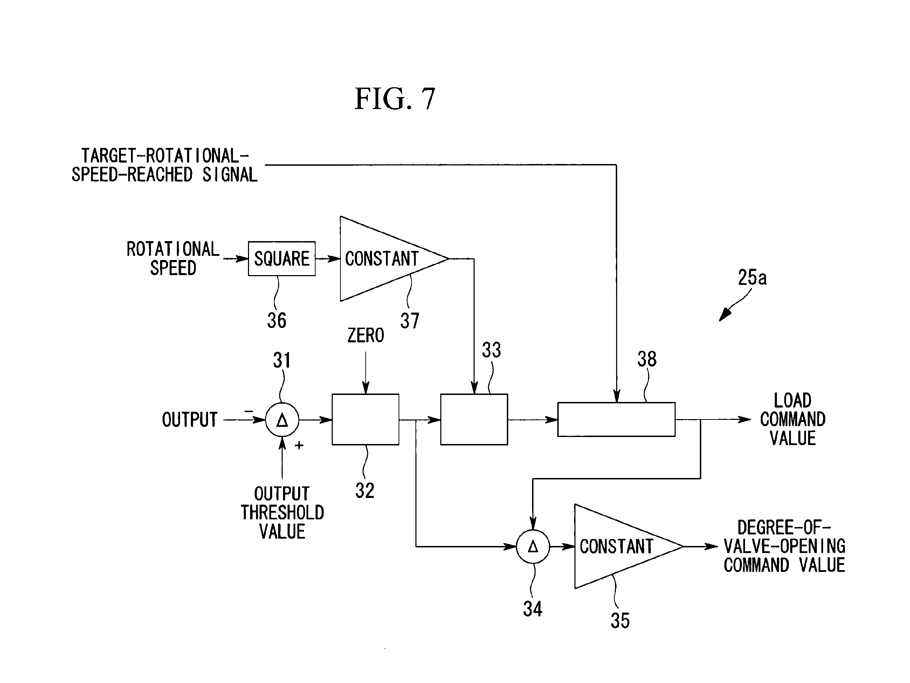

In FIG. 7, a control block diagram of the control device according to this embodiment is shown. Also, FIG. 8 is a diagram showing an example of the output threshold value L' used in the control device according to this embodiment.
As shown in FIG. 7, a control device 25a according to this embodiment includes, at the subsequent stage of the second selecting unit 33, a hold unit 38 that holds the load command value of the continuous resistor bank 24 when the rotational speed of the power generator 22 has reached the predetermined rotational speed. Hence, when the rotational speed has reached the predetermined rotational speed, by maintaining the output of the power supply unit 23 constant, the control can be performed only with the continuous resistor bank 24, and balance control of the rotational speed can be made easier.

According to such a configuration, when the rotational speed of the power generator 22 has reached the predetermined target rotational speed, the output of the power supply unit 23 and the load due to the continuous resistor bank 24 can be balanced, and therefore, fluctuation of the rotational speed of the power generator 22 upon stopping the power supply unit 23 and the continuous resistor bank 24 can be reduced to the minimum. Thus, changes in the state of the plant after stopping the power supply unit 23 and the continuous resistor bank 24 can be reduced to the minimum, and stable operation can be maintained.

### [Third Embodiment]

Next, a closed-cycle plant according to a third embodiment of the present invention will be described.
The closed-cycle plant according to this embodiment is different from the above-described first embodiment in the configuration of the control device. Regarding the closed-cycle plant according to this embodiment, differences from the above-mentioned first embodiment will mainly be described below.

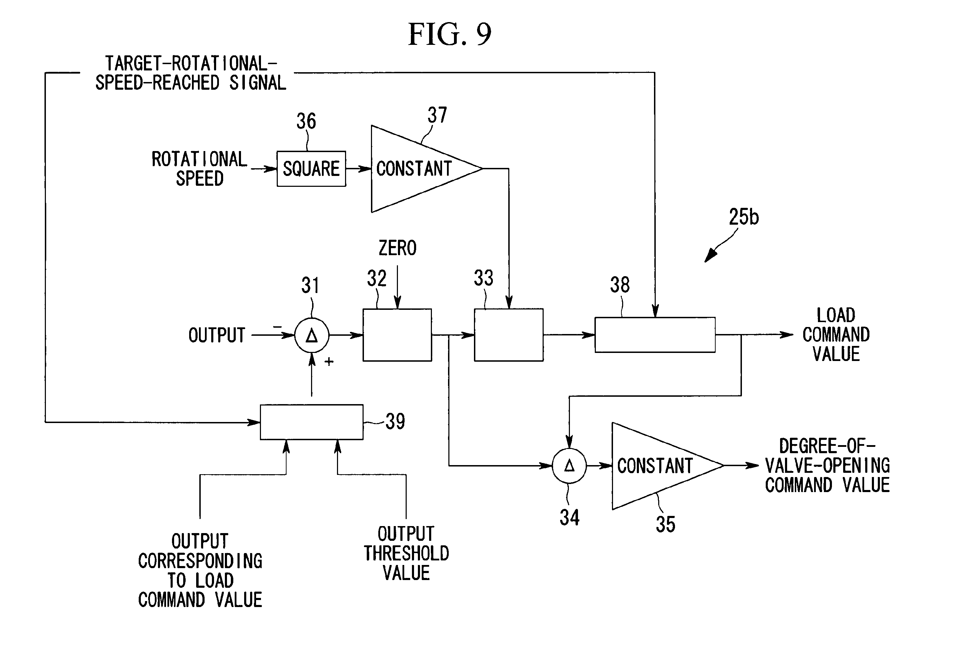

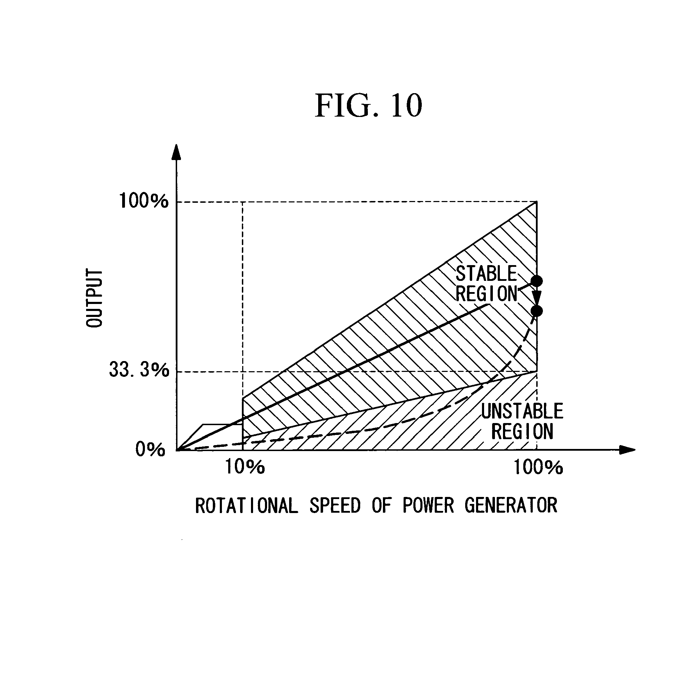

In FIG. 9, a control block diagram of the control device according to this embodiment is shown. Also, FIG. 10 is a diagram showing an example of the output threshold value used in the control device according to this embodiment.
As shown in FIG. 9, the control device 25b according to this embodiment includes, at the subsequent stage of the second selecting unit 33, a hold unit 38 that holds the load command value of the continuous resistor bank 24 when the rotational speed of the power generator 22 has reached the predetermined target rotational speed; and a switch 39 that switches, when the rotational speed of the power generator 22 has reached the predetermined target rotational speed, the output threshold value of the power supply unit 23 to the output set value that corresponds to the load command value of the continuous resistor bank 24.

According to such a configuration, when the rotational speed of the power generator 22 has reached the predetermined target rotational speed, the load command value of the continuous resistor bank 24 is held, and the output threshold value of the power supply unit 23 will be switched to the output set value that corresponds to the load command value of the continuous resistor bank 24. Thus, as shown in FIG. 10, when the rotational speed of the power generator 22 has reached the target rotational speed (100% in FIG. 10), the output of the power supply unit 23 can be made to match to the value corresponding to the load of the continuous resistor bank 24.
Thus, fluctuation of the rotational speed of the power generator 22 upon stopping the power supply unit 23 and the continuous resistor bank 24,can be reduced to the minimum, and changes in the state of the plant can be reduced to the minimum.

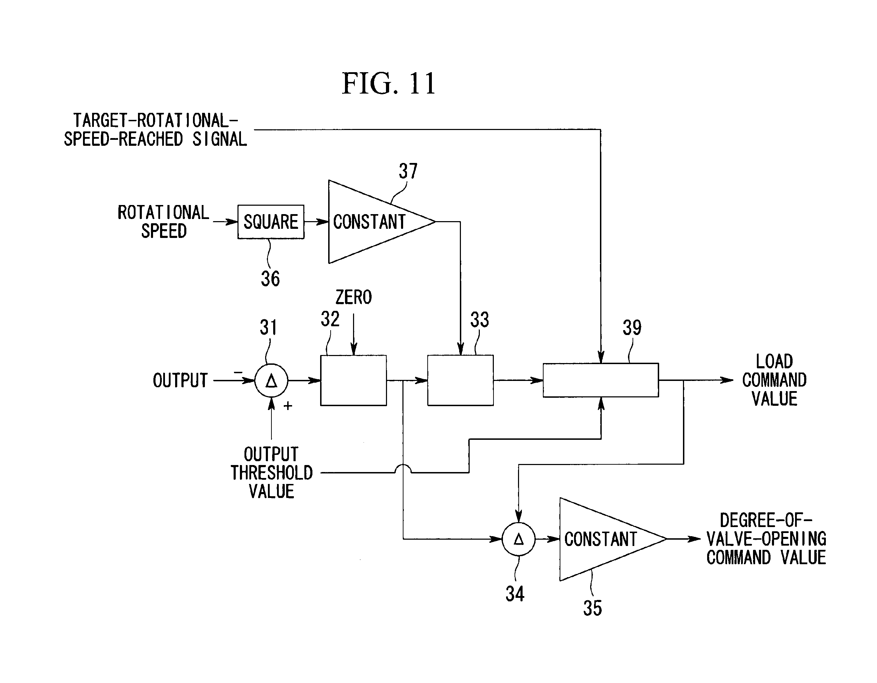

In the above described embodiment, when the rotational speed of the power generator 22 has reached the target rotational speed (for example, 100%), the output threshold value of the power supply unit 23 is made to match the value corresponding to the load of the continuous resistor bank 24; instead of this, however, as shown in FIG. 11, by switching the load command value of the continuous resistor bank 24 to the load command value that corresponds to the output threshold value of the power supply unit 23, control may be performed so as to balance the load of the continuous resistor bank 24 and the output of the power supply unit 23.

## Claims

1. A closed-cycle plant comprising:
a high-temperature gas-cooled reactor having a nuclear reactor;
a gas turbine that is driven by working fluid heated in the high-temperature gas-cooled reactor;
a compressor that is linked coaxially with the gas turbine;
a power generator connected to the gas turbine through an output shaft; and
a power supply unit that is connected to the power generator in a disconnectable manner and supplies electric power to the power generator,
wherein, at startup, the power supply unit is connected to the power generator, and electric power is supplied so as to make the speed-up ratio of the power generator constant.

2. The closed-cycle plant according to Claim 1, wherein the power supply unit determines the speed-up ratio of the power generator based on the rotational speed of the power generator and supplies electric power so as to keep the speed-up ratio constant.

3. The closed-cycle plant according to Claim 1 or 2, further comprising a rotational speed controller that restrains the rotational speed of the power generator by increasing the load, when the output of the power supply unit is equal to or less than the output threshold value that is set at or above the output lower bound where stable operation of the power supply unit is ensured.

4. The closed-cycle plant according to Claim 3, wherein the rotation controller comprises a continuous resistor device that is connected to the power generator in a disconnectable manner.

5. The closed-cycle plant according to Claim 3 or 4, wherein the rotation controller comprises a flow control valve that adjusts the flow rate of coolant supplied to the compressor,
wherein the rotational speed of the power generator is restrained by controlling the degree of opening of the flow control valve.

6. The closed-cycle plant according to any one of Claims 3 to 5, further comprising a control device that controls the load increment of the rotational speed controller on the basis of the difference between the output of the power supply unit and the output threshold value.

7. The closed-cycle plant according to any one of Claims 3 to 6, wherein, when the rotational speed of the power generator has reached the predetermined target rotational speed, the output threshold value is set so as to hold the output of the power supply unit.

8. The closed-cycle plant according to Claim 6, wherein, when the rotational speed of the power generator has reached the predetermined target rotational speed, the control device matches one of the output threshold value of the power supply unit and the load increment of the rotational speed controller with the other.
